# EUROPÄISCHE PATENTSCHRIFT

(11) **EP 2 595 911 B1**
(45) Veröffentlichungstag und Bekanntmachung des Hinweises auf die Patenterteilung: **21.10.2015**
(21) Anmeldenummer: 11730649.8
(22) Anmeldetag: 07.07.2011
(51) Int. Cl.: B66B 7/12, G01N 27/82

(54) **ZERSTÖRUNGSFREIES PRÜFEN EINES TRAGELEMENTS EINER AUFZUGSANLAGE**
NONDESTRUCTIVE TESTING OF A CARRIER ELEMENT OF A LIFT INSTALLATION
CONTRÔLE NON DESTRUCTIF D'UN ÉLÉMENT PORTEUR D'UN ÉQUIPEMENT ÉLÉVATEUR

(30) Priorität: 23.07.2010 EP 10170686
(43) Veröffentlichungstag der Anmeldung: 29.05.2013
(73) Patentinhaber: Inventio AG, 6052 Hergiswil NW (CH)
(72) Erfinder: HUSMANN, Josef, CH-6006 Luzern (CH); BEGLE, Guntram, CH-6353 Weggis (CH)
(74) Vertreter: Hirschberger, Petra
(86) Internationale Anmeldenummer: PCT/EP2011/061509
(87) Internationale Veröffentlichungsnummer: WO 2012/010431

(56) Entgegenhaltungen:
- EP-A2- 0 271 728
- DE-A1-102005 050 220
- JP-A- 2009 057 126

## Beschreibung

Die Erfindung betrifft ein Verfahren und eine Vorrichtung zur zerstörungsfreien Prüfung eines Tragelements einer Aufzugsanlage.

Eine Aufzugsanlage ist in einem Gebäude eingebaut und besteht im Wesentlichen aus einer Kabine, welche von einem oder mehreren Tragelementen getragen ist. In einer bekannten Aufzugsanlage wirkt ein Antrieb auf die Tragelemente, um die Kabine entlang von, im Wesentlichen vertikalen, Führungsschienen zu verfahren. Die Aufzugsanlage wird verwendet um Personen und Güter innerhalb des Gebäudes über einzelne oder mehrere Etagen hinweg zu befördern.

Die Tragelemente können als einzelne Rundseile aus Metall (Stahl) ausgestaltet sein. Jedes Rundseil hat z.B. einen Durchmesser von ca. 8 - 10 mm und ist aus einzelnen Litzen verseilt, die wiederum aus einzelnen Drähten bestehen. Die Rundseile sind üblicherweise nicht ummantelt, so dass an deren Oberflächen die Verseilung sichtbar ist. Je nach Anwendung, können diese Tragelemente auch ummantelt sein; die einzelnen Litzen beziehungsweise Drähte sind dann nicht sichtbar.

Die Tragelemente können aber auch Flachseile oder Flachriemen sein, die einen rechteckförmigen Querschnitt haben, d.h. solche Flachriemen sind breiter als hoch (dick). Ein Flachriemen besteht aus einzelnen dünnen Stahlseilen oder Zugträgern, die in einen Kunststoff eingebettet sind und von diesem ummantelt werden. Die Stahlseile, bzw. Zugträger nehmen Zugkräfte auf, während der Kunststoff u.a. die Stahlseile vor äusseren Umwelteinflüssen schützt und z. B. für eine gewünschte Traktion an einer Treibscheibe der Aufzugsanlage sorgt.

Die Tragelemente können auch aus Zugträgern in der Form von nichtmetallischen Seilen und Litzen bestehen. Derartige nichtmetallische Litzen, bzw. Zugträger, können beispielsweise aus Kohlenstoff-, Siliziumfasern, aus Aramid- oder Glasfasern, u.s.w. hergestellt werden. Diese nichtmetallischen Seile oder Litzen sind in der Regel in einen Kunststoffmantel eingebettet. Die Seile oder Litzen nehmen Zugkräfte auf, während der Kunststoffmantel u.a. die Seile oder Litzen vor äusseren Umwelteinflüssen schützt und wiederum für eine gewünschte Traktion an einer Treibscheibe der Aufzugsanlage sorgt. Diese nichtmetallischen Tragelemente können ebenso mit runder Gestallt in der Form von Flachseilen oder als Flachriemen ausgeführt sein.

Zur Gewährleistung der Sicherheit von Aufzugsanlagen werden die eingesetzten Tragelemente regelmässig überprüft. Dabei wird geprüft, ob Mängel, wie Knicke, Schlaufenbildung, Brüche von Litzen und Drähten, Lockerungen der äusseren Lage, oder Quetschungen aufgetreten sind. Zur Überprüfung können verschiedene Technologien und Verfahren verwendet werden. Bekannte Verfahren basieren zum Beispiel auf einer visuellen Inspektion durch einen Wartungstechniker oder einer Messung von elektrischen (z.B. Widerstand) oder magnetischen Eigenschaften (z.B. magnetischer Fluss).

Zur Prüfung der Tragelemente mit metallischen Seilen oder Litzen können beispielsweise Verfahren eingesetzt werden, bei denen das Tragelement magnetischen Feldern ausgesetzt und Änderungen des magnetischen Flusses festgestellt werden. Aus US5,198,765 ist ein Verfahren bekannt, bei dem anhand eines Magnetisierungskopfs ein Magnetfeld erzeugt wird, durch das ein Tragelement in axialer Richtung bewegt wird. Dabei wird das Tragelement an einem ersten Ort magnetisch gesättigt. An einem weiteren Ort ist eine Abtasteinrichtung vorgesehen, mittels der Magnetflussänderungen im Tragelement festgestellt werden, die in Beziehung zu einer Querschnittsflächenänderung im Tragelement gesetzt werden. In US 5,804,964 ist beschrieben, dass bei Unterbrüchen einzelner Drähte auch Streufelder auftreten können, die aus dem Tragelement hinaustreten und mittels eines Hall-Sensors erfasst werden.

Zur Prüfung von Tragelementen mit nichtmetallischen Tragelementen sind Lösungen mit sogenannten Indikatorenlitzen bekannt, welche in das Tragelement eingelegt werden. Mittels dieser Indikatorenlitzen kann Verschleiss der Tragelemente erkannt werden.

Erschwert wird die Untersuchung des Tragelements, wenn dieses eine Ummantelung aufweist. Schäden, die bereits so gravierend sind, dass sie bereits äusserlich sichtbar sind, können trotz der Ummantelung erkannt werden. Die Ummantelung verhindert jedoch, dass eine sich abzeichnende, anfangs noch geringe Beschädigung, äusserlich sichtbar ist. Diese äusserlich nicht sichtbaren Beschädigungen des Zugträgers stellen ein potentielles Risiko für die Sicherheit dar. Eine alleinige visuelle Inspektion durch einen Wartungstechniker ist daher nicht ausreichend.

EP 0271728 A2 offenbart ein Verfahren zur Messung von Eigenschaften von Seilen. wobei mit Hilfe eines Bildsensors ein zweidimensionales Bild eines Abschnitt des Seiles aufgenommen wird, wobei das Bild digitalisiert wird, und wobei durch, eine. Recheneinheit verschiedene Werte der zu erfassenden Eigenschaften ermittelt werden. Solche Eigenschaften können beispielsweise ein Durchmesser des Seiles oder statistische Werte abstehender Drähte sein.

JP 2009 057126 A offenbart eine Verschleissanzeigevorrichtung für ein Seil in einer Aufzugsanlage, wobei ein Lasertrahl das Seil gerichtet wird, wobei durch eine Kamera ein Bild der reflektierten Strahlung erzeugt wird, und wobei anhand des Bildes allfällige Beschädigungen des Seiles erkannt werden.

DE 10 2005 050220 A1 offenbart ein Verfahren zum Inspizieren eines laufenden Drahtseiles, wobei jeweils ein Abschnitt des Seils entsprechend einer Schlaglänge oder einem mehrfachen, der Schlagelänge fotografiert wird, und wobei die resultierenden Aufnahmen miteinander verglichen werden, um Schäden am Seil zur erkennen.

Der vorliegenden Erfindung liegt daher eine Aufgabe zu Grunde, eine Technologie zur zuverlässigen und zerstörungsfreien Prüfung eines Tragelements, insbesondere eines mit einer Ummantelung versehenen Tragelements, einer Aufzugsanlage anzugeben. Die Prüfung des Tragelements soll zuverlässige Daten liefern, welche es erlauben, relevante Informationen über den tatsächlichen Zustand des Tragelements zu ermitteln, so dass dessen Ablegereife festgestellt werden kann. Messergebnisse sollen dabei durch Ummantelungen, Ablagerungen und Verschmutzungen, wie Schmiermittel, Kunststoffüberzüge, Ölspritzer, Abriebpartikel, etc., welche das Tragelement unter Umständen umgeben oder darauf abgelagert sein können, möglichst nicht beeinflusst werden.

Um diese Aufgabe zu lösen, nutzt die hier beschriebene Technologie eine Empfangseinheit für elektromagnetische Strahlung, die auf ein zu prüfendes ummanteltes Tragelement ausgerichtet ist, um aus empfangenen elektromagnetischen Strahlungen, deren Wellenlänge im Bereich von 90 µm bis120 µm liegt, Prüfdaten zu erzeugen. Zur Abgabe der elektromagnetischen Strahlung wird eine Sendeeinheit aktiviert. Die Prüfdaten werden in einer Verarbeitungseinrichtung ausgewertet, um eine Abweichung der Prüfdaten von einem Sollzustand des Tragelements festzustellen. Diese Technologie dient der vorzugsweise zerstörungsfreien Prüfung wenigstens eines Tragelements einer Aufzugsanlage, in der das Tragelement eine Kabine trägt.

Gemäss einer Ausführung werden vom Tragelement Aufnahmen (beziehungsweise eine Reihe von Aufnahmen) gemacht und diese Aufnahmen werden mit idealen Zustandsmustern, d.h. mit Zustandsmustern die einen guten, bzw. akzeptierbaren Zustand des Tragelements repräsentieren, verglichen. Diese Auswertung der Aufnahmen erfolgt vorzugsweise mittels automatischer computerunterstützter Auswertealgorithmen, beispielsweise mittels Software zur Aufnahmeauswertung. So können vom Tragelement, beispielsweise durch Kantenextraktion der Aufnahmen, Übergänge von Materialien unterschiedlicher Dichte, unterschiedlicher elektrischer Leitfähigkeit oder unterschiedlicher Transparenz erfasst werden. Erwartungsgemäss müssten diese Kantenübergänge ein entsprechend der Längsausrichtung des Tragelements bestimmtes Linienmuster ergeben. Unregelmässigkeiten, wie Unterbrüche, Ein- oder Ausbuchtungen in diesem Linienmuster deuten auf einen Verschleiss oder Defekt des Tragelements hin und bei einer Häufung solcher Unregelmässigkeiten muss das Tragelement ersetzt oder gezielter untersucht werden.

Gemäß einem anderen Ausführungsbeispiel werden nach einem Einbau eines Tragelements Referenzbilder des Tragelements erstellt und in einer Datenbank abgelegt. Diese Referenzbilder stellen den Sollzustand eines Tragelements dar. Auf diesen Referenzbildern ist vor allem die Oberfläche des Tragelements, bzw. je nach Art der Prüfstrahlung oder nach Transparenzzustand der Ummantelung auch Oberflächen von Seilen, Litzen und Drähten, welche in einer Ummantelung eingebettet sind, sichtbar. Während dem Gebrauch des Tragelements ändern sich diese Oberflächen des Tragelements und der eingebetteten Elemente, vor allem nach längerem Gebrauch. Kommt es beispielsweise zu Drahtbrüchen oder Drahtverwerfungen stehen Drahtgruppen oder einzelne Litzen vom Tragelement beziehungsweise von einem im Tragelement vorhandenen geschlagenen Seil ab. Diese abstehenden Litzen können eine Ummantelung durchdringen und äusserlich sichtbar sein. Wird dann von derselben Stelle eine Bildaufnahme (beziehungsweise eine Reihe von Bildaufnahmen) gemacht und diese mit dem abgespeicherten Bild verglichen, so sind die abgebrochenen Litzen oder Verwerfungen erkennbar. Auch die Auswertung dieser Bildaufnahmen erfolgt vorzugsweise mittels automatischer computerunterstützter Auswertealgorithmen, beispielsweise mittels Software zur Bildauswertung.

Die hier beschriebenen Ausführungsbeispiele der Technologie erlauben einerseits die Prüfung von Tragelementen, die lediglich aus metallenen geschlagenen Drahtseilen bestehen oder die eine Ummantelung aufweisen, in die wenigstens ein (geschlagenes) Drahtseil oder eine Litze integriert beziehungsweise eingebettet ist. Die integrierten Drahtseile und Litzen können dabei geprüft werden, ohne dass die Ummantelung geöffnet oder entfernt wird. In einer Ausgestaltung der Technologie kann ferner der Zustand der Ummantelung überprüft werden. In einer weiteren Ausgestaltung der Technologie können andererseits auch Tragelemente, mit nichtmetallenen Seil und Litzenstrukturen überprüft werden.

In einem Ausführungsbeispiel sind wenigstens eine Sendeeinheit und wenigstens eine Empfangseinheit vorgesehen, welche zur Abgabe bzw. zum Empfang von elektromagnetischen Strahlungen geeignet sind. Die Wellenlänge dieser elektromagnetischen Strahlung liegt im Bereich von ca. 30 µm bis ca. 950 µm. In einem weiteren Ausführungsbeispiel wird zusätzlich zur elektromagnetischen Strahlung im Bereich von ca. 30 µm bis ca. 950 µm Strahlung im sichtbaren Bereich von ca. 400 nm bis ca. 800 nm verwendet. Anhand der empfangenen elektromagnetischen Strahlung werden in einer Auswerteeinheit Transmissionsmuster und/oder Reflektionsmuster gebildet, die ausgewertet werden, um Oberflächen- oder Konturveränderungen des Tragelements, bzw. der im Tragelement eingebetteten Seile und Litzen zu ermitteln.

Zur Erfassung von Prüfstrahlurigen, welche im Bereich des sichtbaren Lichts liegen, wird in einer einfachen Ausgestaltung Tageslicht oder künstliches Licht verwendet, welches von einer Schachtbeleuchtung abgegeben wird. Mittels Photosensoren, die in der Empfangseinheit vorhanden sind, können daher Lichtstrahlungen erfasst werden, welche an der Oberfläche des Tragelements reflektiert werden. Ferner kann der sichtbare Schattenwurf des Tragelements aufgenommen werden. Die Empfangseinheit, zum Beispiel eine Kamera (vorzugsweise eine Digitalkamera, oder eine digitale Videokamera, die aus von der Oberfläche des Tragelements reflektierten Lichts digitale Bildaufnahmen erzeugen), und die Sendeeinheit bzw. die Lichtquelle (wenn Tageslicht nicht ausreichen sollte) können daher auf derselben Seite oder auf vorzugsweise einander diametral gegenüberliegenden Seiten des Tragelements angeordnet sein. Im Allgemeinen genügt es grössere Schäden zu erkennen. Deswegen genügen geringe Auflösungen, bspw. eine Auflösung von unter 1 Megapixel schon vollkommen. Diese Prüfstrahlungen werden vorzugsweise verwendet, wenn die sichtbare Oberfläche des Tragelements überwacht werden soll.

Nicht sichtbare Prüfstrahlungen, deren Wellenlänge im Bereich von 30 µm bis 950 µm, vorzugsweise im Bereich von 90 µm bis 120 µm liegt, werden von einer entsprechend ausgestalteten Sendeeinheit entlang einer Transmissionsachse abgestrahlt und von einer auf der gegenüberliegenden Seite des Tragelements vorgesehenen Empfangseinheit oder von einer Empfangseinheit erfasst, welche entlang einer oder mehrerer Reflexionsachsen ausgerichtet ist, die ihren Ursprung im Tragelement hat. Die Empfangseinheit ist in diesem Fall zum Empfang von elektromagnetischen Strahlungen in diesem Wellenlängenbereich ausgelegt. Diese Prüfstrahlungen werden vorzugsweise zur Überprüfung von Tragelemente mit intransparenter Ummantelung, wie Gummi oder eingefärbtem Polyurethane, verwendet. Elektromagnetische Strahlung in diesem Bereich durchdringt derartige Ummantelungen. Diese Ummantelungen sind dementsprechend für diese Prüfstrahlung transparent. Selbstverständlich können auch Tragelemente mit transparenter Ummantelung mittels dieser elektromagnetischen Strahlung überprüft werden.

In einer Ausführung beinhaltet die Empfangseinheit mehrere Empfangssensoren, welche entlang von unterschiedlichen Achsen angeordnet sind. Damit lässt sich ein 3-dimensionales Abbild der Oberfläche erzeugen.

In der Regel genügt es durchaus, wenn Häufungen von Brüchen von Drähten oder Faserbereichen erkannt werden können. Solche Häufungen erzeugen Beeinträchtigungen der Konturen von mehr als 1/10 mm. Die genannten Prüfstrahlungen, deren Wellenlänge im Bereich von etwa 100 µm liegen sind zur Erkennung derartiger Fehler geeignet. Zur Erkennung derartiger Schäden genügen auch deutlich reduzierte Auflösungen der Erfassungseinheiten. Es können dafür beispielsweise Wärmebildkameras verwendet werden, deren Auflösung beispielsweise im Bereiche von 480 x 320 Pixel liegt oder es können in einer besonders günstigen Ausführung auch nur einzelne oder wenige Sensorzeilen, beispielsweise entsprechend einer Auflösung von 3 x 320 Pixel, verwendet werden. Die Empfangseinheit wird dann kontinuierlich, wie bei einem Kopiergerät, dem Tragelement entlang bewegt, wodurch ein vollständiges Abbild des Tragelements entsteht. Selbstverständlich spielt es dabei keinen Unterschied ob das Tragelement an der Empfangseinheit vorbeibewegt, oder die Empfangseinheit dem Tragelement entlang geführt wird.

In einer Weiterführung dieser Prüfmethodik ist es denkbar, beispielsweise mit einer Induktionsspule die Tragelemente geringfügig zu erwärmen. Dabei werden durch die Induktion lediglich metallene Zugträger, bzw. Litzen oder Seile erhitzt. Die erhitzten Zugträger erzeugen eine dieser Temperatur entsprechende Strahlung. Mit einer Wärmebildkamera kann das Wärmeprofil des Zugträgers erfasst werden. Diese Wärmebildkamera ist mit einer Linse versehen, welche eine Erfassung von Prüfstrahlungen, deren Wellenlänge dann im Bereich von unter 30 µm, typischerweise im Bereich von etwa 10 µm, liegt, ermöglicht. Im Falle von Störungen im metallischen Querschnitt der Zugträger ergeben sich auch Abweichungen im Wärmeprofil des Zugträgers. Eine Auswertung dieses Wärmeprofils kann wiederum mittels einem der vorgängig geschilderten Verfahren, mittels Bildvergleich oder mittels Kantenextraktionsverfahren erfolgen.

Praktisch alle z. B. an einem Seil oder Litze auftretenden Änderungen können einen signifikanten Einfluss auf die Oberflächenbeschaffenheit des Seils, bzw. der Litze haben. Die peripheren Litzen, Drähte oder Fasern eines Seils sind normalerweise einer erhöhten Belastung ausgesetzt, weil sie mit Führungs- und Umlenkelementen der Aufzugsanlage in Kontakt und daher mechanisch stark beansprucht sind. Ferner treten in peripheren Litzen, Drähte oder Fasern Seils zumeist höhere Zug- und Biegekräfte auf, welche zu einem ganzen oder teilweisen Bruch von Litzen, Drähten oder Fasernsträngen führen können. Ferner verursachen Umwelteinflüsse, Alterungseinflüsse oder andere externe Einwirkungen hauptsächlich Änderungen an der Aussenfläche eines metallenen Gegenstandes. Eine Korrosion tritt daher zuerst und dominant an der Oberfläche von Drahtseilen auf. Umwelt-, Alterungseinflüsse und andere externe Einwirkungen haben aber auch Einfluss auf nichtmetallische Werkstoffe oder auch auf die Kunststoffummantelung der Tragelemente.

Mängel treten daher fast ausschliesslich im peripheren Bereich des Seils auf, weshalb die Prüfung der Oberflächenbeschaffenheit bereits aus diesem Grund wesentliche Informationen über die Beschaffenheit des Tragelements liefern kann.

Sofern hingegen innerhalb des Seils optisch nicht erkennbare Unterbrüche auftreten, so erfahren die peripheren Litzen, Drähte oder Fasernstränge unter der einwirkenden Last eine Dehnung, welche ebenfalls zu einer Änderung der Oberflächenbeschaffenheit und der Abmessung (Durchmesser) des Seils führt. Durch die Erfassung und Analyse der Abmessungen, und / oder der Oberflächen des Tragelements, bzw. der eingebetteten Seile, Litzen und Drähte, kann dessen Zustand beurteilt werden. Wie bereits erläutert ist es in der Regel lediglich erforderlich Summationen von Fehlern zu erkennen, welche dann ein Schadensbild vom mehreren 1/10 mm bewirken. Derartige Mängel können mittels Strahlung im genannten Wellenbereich von 90 µm bis 120 µm genügend genau erfasst werden.

Die beschriebenen Ausführungsbeispiele der Technologie erlauben daher die Ermittlung von Statusinformationen, welche zur Bestimmung der Ablegereife der Tragelemente hinreichend sind. Es besteht zudem die Möglichkeit, die vorliegende Technologie mit aufwändigeren weiteren Prüfverfahren zu kombinieren oder es können die Auswertung mittels Prüfstrahlung im sichtbaren und im unsichtbaren Bereich kombiniert werden. Sofern eine Veränderung der Kontur oder Oberflächenstruktur eines Seils festgestellt wurde, kann z.B. auch eine Durchstrahlung des Seils mittels Röntgenverfahren durchgeführt werden. Dieses aufwändige Verfahren, welches Sicherheitsrisiken mit sich bringt, kann daher im Bedarfsfall auf einen einzelnen Bereich des Tragelements reduziert werden. Selbst für den Fall der Kombination mit weiteren Verfahren resultiert daher ein stark reduzierter Aufwand.

Vorzugsweise ist die Einrichtung, welche die Empfangseinheiten und eine zugehörige Auswerteeinheit beinhaltet mit einer Bezeichnungseinrichtung ausgestattet. Die Bezeichnungseinrichtung markiert bei Feststellung eines Mangels die betreffende Stelle des Tragelements, beispielsweise mit einem Farbpunkt. Dadurch kann diese Stelle für eine detaillierte Analyse einfach gefunden werden.

Vorzugsweise werden in einem ersten Ausführungsbeispiel elektromagnetische Prüfstrahlungen verwendet, deren Wellenlänge im Bereich von 30 µm bis 950 µm, d.h. im langwelligen Bereich der Infrarotstrahlung liegt. Die Wellenlänge wird dabei derart gewählt, dass einerseits dielektrische Materialien durchdrungen werden und, dass andererseits elektrisch leitenden Materialien, wie beispielsweise metallische Materialien, die Prüfstrahlung reflektieren. Für die Durchdringung der Ummantelungen eines Tragelements, die zum Beispiel aus Gummi oder Polyurethan (PU) besteht, werden vorzugsweise Prüfstrahlungen mit Wellenlängen im Bereich von 90 µm bis 120 µm verwendet. Für Prüfstrahlungen mit Wellenlängen in diesem Bereich sind die Ummantelung der Tragelemente sowie allfällige Ablagerungen, wie Öle oder Fette, transparent, bzw. sie weisen einen relativ geringen Transmissionswiderstand auf. Diese. Ausführung ist dementsprechend besonders bei verschmutzen Tragelementen zu empfehlen.

Durch die Abtastung der Tragelemente mittels der Prüfstrahlung können daher Transmissionsmuster gebildet werden, welche dem "Schattenwurf" des metallenen Anteils des Tragelements entsprechen. Sofern der Schattenwurf vom im Wesentlichen gleichmässigen geradlinigen Verlauf abweicht, werden diese typischerweise durch periphere Mängel des Tragelements, wie gestauchten oder gebrochenen Drähten oder anderen Störungen im Tragelement verursacht. Diese Mängel können in einem Ausführungsbeispiel durch die Auswertung der Transmissionsmuster erfasst und ausgewertet werden. Sofern die die Störungen im Seil oder den Litzen die Oberfläche des Tragelements selbst beeinflussen, indem beispielsweise gebrochene oder gestauchte Drähte aus der Ummantelung austreten, können diese Mängel gemäß einem anderen Ausführungsbeispiel natürlich auch ergänzend mittels einer Bilderzeugung im sichtbaren Wellenlängenbereich anhand der dafür vorgesehenen Empfangseinheit erfasst werden.

Durch die Abtastung der Tragelemente mittels der Prüfstrahlung werden diese durch den metallenen Anteil des Tragelements reflektiert. Diese reflektierte Prüfstrahlung verläuft entlang einer Reflektionsachse zu einer weiteren Empfangseinheit, welche diese reflektierte Strahlung empfangen kann und als Reflektionsmuster abbildet. Dieses Reflektionsmuster enthält wertvolle Informationen über den Zustand des metallenen Anteils des Tragelements und erlaubt so die Analyse des Tragelements, bzw. des metallenen Anteils des Tragelements. Dabei können weitere Störungen im Tragelement, im Besonderen Schäden der Oberflächenstruktur erkannt werden. Selbstverständlich können auch hier weitere Detailanalysen wie vorgängig beschrieben angewendet werden.

Sofern innerhalb des Querschnitts des Tragelements Mängel auftreten, so können diese detektiert werden, indem resultierende Änderungen an der Oberfläche, wie Stauchungen oder Einschnürungen untersucht werden.

Die Prüfung kann besonders beispielsweise durchgeführt werden, indem Referenzmuster verwendet werden. Vorteilhafterweise sind Referenzmuster einsetzbar, die vom Prüfling selbst, beispielsweise vor dessen Inbetriebnahme aufgenommen wurden und einen Sollzustand darstellen. Besonders präzise Messresultate können erzielt werden, wenn gespeicherte Transmissionsmuster und Reflektionsmuster (z. B. durch eine Videokamera aufgezeichnet) den einzelnen Abschnitten des Tragelements präzise zugeordnet und mit aktuell aufgenommenen Transmissionsmustern und Reflektionsmustern derselben Abschnitte verglichen werden. Zur Ermittlung von Unregelmäßigkeiten werden dann den Abschnitten entsprechende Referenzmuster verwendet.

Dazu werden beispielsweise vorzugsweise Tragelemente verwendet, die über die ganze Länge markiert sind. Diese Markierungen können in die Ummantelung eingeprägt sein. Ferner können die Tragelemente mittels Farben markiert werden. In anderen Ausgestaltungen werden RFID-Chips in die Ummantelung integriert. Anhand von Lesegeräten, optischen Abtastvorrichtungen oder RFID-Lesegräten, können die Markierungen gelesen und die einzelnen Abschnitte des Tragelements identifiziert und die entsprechenden Referenzmuster geladen werden. Ferner kann ein Abschnitt des Tragelements anhand der Position der Aufzugskabine rechnerisch identifiziert werden.

Die Prüfung kann natürlich auch durchgeführt werde, indem lediglich die Konturen oder Kanten der Transmissions- und Reflexionsmuster bewertet werden bei einem intakten Tragelement bilden alle Konturen am und im Tragelement im Wesentlichen gerade, parallel verlaufende Linien. Ein- oder Ausbuchtungen oder Ausfransungen dieser Konturen deuten auf eine Störung im Tragelement und können im Detail analysiert werden. Diese Ausführung benötigt wenig Speicherplatz, insbesondere da keine Referenzdaten gespeichert werden müssen.

Eine derartige Prüfung ist vorteilhaft, wenn bestehende Tragelemente, die teilweise schon jahrelang in Betrieb sind, bewertet werden müssen. Von diesen Tragelementen existieren keine spezifischen Referenzdaten.

Alle diese Verfahrensvarianten, einerseits die Aufnahme und Auswertung von Transmissionsmustern und andererseits die Aufnahme und Auswertung von Reflektionsmustern, sowie die zugehörigen Auswertungen mittels Referenzdaten oder Bewertung der Konturen und Kanten können für sich allein angewendet werden und sie erlauben eine zweckentsprechende Prüfung des Tragelements. Durch eine optionale Kombination dieser Verfahrens- und Bewertungsmöglichkeiten kann bei Bedarf eine wesentlich höhere Zuverlässigkeit erzielt werden. Dabei können Fragen, die bei einer Verfahrensvariante auftreten, anhand der Prüfergebnisse beantwortet werden, die mit der anderen Verfahrensvariante ermittelt werden. Weiterhin kann die Zuverlässigkeit der Prüfung erhöht werden, indem Messungen in verschiedenen Wellenlängenbereichen durchgeführt werden.

In einem Ausführungsbeispiel wird daher vorgesehen, dass die Erfassung von Reflektionsmustern und Transmissionsmustern in mehreren Prüfschritten mit elektromagnetischen Prüfstrahlungen erfolgt, die unterschiedliche Wellenlängen aufweisen. Durch die Verwendung von Prüfstrahlungen mit Wellenlängen im Bereich von 30 µm bis 950 µm, vorzugsweise im Bereich von 90 µm -120 µm, können der Schattenwurf und die Oberflächenbeschaffenheit des metallenen Anteils des Tragelements ermittelt werden. Durch die Verwendung von Prüfstrahlungen mit Wellenlängen im sichtbaren Bereich können der Schattenwurf und die Oberflächenbeschaffenheit der Ummantelung selbst ermittelt und geprüft werden. Gleichzeitig können gegebenenfalls vorgesehene Markierungen am Tragelement detektiert werden.

Vorzugsweise werden Reflektionen entlang einer Reflektionsachse erfasst, welche mit der Transmissionsachse einen Winkel einschliesst, welcher - mit einem Bogenverlauf von der Sendeeinheit zur Empfangseinheit - einen Winkel einschliesst, der im Bereich von 0° bis 90° oder im Bereich von 0° bis -90° bzw. +/- n/2 liegt. In diesem Winkelbereich erfasste Strahlung erlauben die Abbildung wesentlicher Anteile des Tragelements. In einer Ausführungsvariante sind einer Sendeeinheit zwei Empfangssensoren zugeordnet, welche in unterschiedlichen Winkelbereichen angeordnet sind. So lässt sich ein im Wesentlichen dreidimensionales Element erfassen. Vorzugsweise sind zwei Empfangseinheiten in jeweils einem Winkel von +/- 45° zur Empfangseinheit, also gegeneinander um 90° versetzt angeordnet.

Alternativ oder in Kombination werden die Sendeeinheit und die wenigstens eine Empfangseinheit von einer drehbaren Tragvorrichtung gehalten und um das Tragelement zwischen wenigstens zwei Positionen gedreht, bzw. geschwenkt, um das Tragelement von wenigstens zwei Seiten abzutasten. Durch die Verwendung der dreh-, bzw. schwenkbaren Tragvorrichtung kann eine vollständige Prüfung des Tragelements mit wenigen Empfangssensoren durchgeführt werden. Die Steuerung der Tragvorrichtung erfolgt vorzugsweise mit einer Rechnereinheit, die ebenfalls der Auswertung der Prüfstrahlung dient. Die Auswerteeinheit ist vorzugsweise mit einem Datenspeicher bzw. einer Datenbank verbunden, aus der gespeicherte Daten der verwendeten Tragelemente abrufbar sind.

Die Sendeinheit zur Erzeugung von Wellenlängen im nicht sichtbaren Bereich verwendet vorzugsweise Laser, beispielsweise Zwei-Farben-Diodenlaser, welche zwei unterschiedliche Lichtfrequenzen erzeugen. Durch Überlagerung dieser zwei Lichtfrequenzen entsteht eine Schwebung. Eine photoleitende Antenne wirkt als Tiefpassfilter und emittiert die resultierende Strahlung. Auch die Verwendung eines Quantenkaskadenlasers ist möglich. Mittels dieser Sendeinheitkönnen Wellenlänge im Bereich von etwa 30 µm bis 500 µm eingestellt werden.

Die Sendeeinheit und die entlang der Reflektionsachse ausgerichtete Empfangseinheit sind vorzugsweise in einem Modul integriert, so dass ein einfacher und kostengünstiger Aufbau der Prüfvorrichtung realisiert werden kann. Auf diese Weise ist es möglich, zwei oder mehrere der integrierten Module zu verwenden, die beispielsweise von steuerbaren mechanischen Armen gehalten werden. Dabei kann die Empfangseinheit eines Moduls reflektierte Prüfstrahlung desselben Moduls und entlang der Transmissionsachse von einem anderen Modul übertragene Prüfstrahlung empfangen.

In einer Ausgestaltung werden die Sendeeinheit und die Empfangseinheit direkt mit dem Tragelement gekoppelt und in einem definierten Abstand davon gehalten. Auf diese Weise gelingt es, Transmissionsmuster und Reflektionsmuster stets in gleicher Weise und in optimierter Qualität zu erfassen. Vorzugsweise sind die Sendeeinheit und die Empfangseinheit in einem Gehäuse angeordnet, das dem Tragelement entlang verfahrbar ist, oder dem das Tragelement entlang geführt ist. Im ersten Fall ist beispielsweise das Gehäuse mit Sende- und Empfangseinheit auf einer Aufzugskabine angeordnet und wird mit dieser dem Tragelement entlang verfahren und im zweiten Fall ist beispielsweise das Gehäuse im Schacht befestigt und das Tragelement wird dem Gehäuse entlang geführt. Selbstverständlich weist das Gehäuse mit integrierter Sende- und Empfangseinheit auch entsprechende Führungsmittel, wie Rollen, Räder oder Gleitelemente, auf, welche eine exakte Positionierung des Tragelements in Relation zum Gehäuse ermöglichen.

Im Folgenden wird die Erfindung anhand mehrerer Ausführungsbeispiele im Zusammenhang mit den nachstehenden Figuren näher erläutert. Es zeigen:
- Fig. 1: eine schematische Darstellung eines Ausführungsbeispiels einer Aufzugsanlage mit Tragelementen, die mittels einer Prüfvorrichtung geprüft werden;
- Fig. 2: eine schematische Darstellung eines Ausführungsbeispiels der Prüfvorrichtung von Fig. 1;
- Fig. 3: eine schematische Darstellung eines weiteren Ausführungsbeispiels einer Prüfvorrichtung, Mittels der ein flaches Tragelement in einer ersten Anordnung geprüft wird;
- Fig. 4: eine schematische Darstellung eines weiteren Ausführungsbeispiels einer Prüfvorrichtung, Mittels der ein flaches Tragelement in einer zweiten Anordnung geprüft wird;
- Fig. 5: eine schematische Darstellung eines weiteren Ausführungsbeispiels einer Prüfvorrichtung, die direkt mit einem flachen Tragelement gemäss Fig. 3 oder Fig. 4 gekoppelt ist;
- Fig. 6a: eine schematische Darstellung eines Ausschnitts eines Tragelements;
- Fig. 6b: eine Auswertung des Ausschnitts von Fig. 6a mittels Kantenextraktion bei intaktem Tragelement; und
- Fig. 6c: eine Auswertung des Ausschnitts von Fig. 6a mittels Kantenextraktion bei beschädigtem Tragelement.

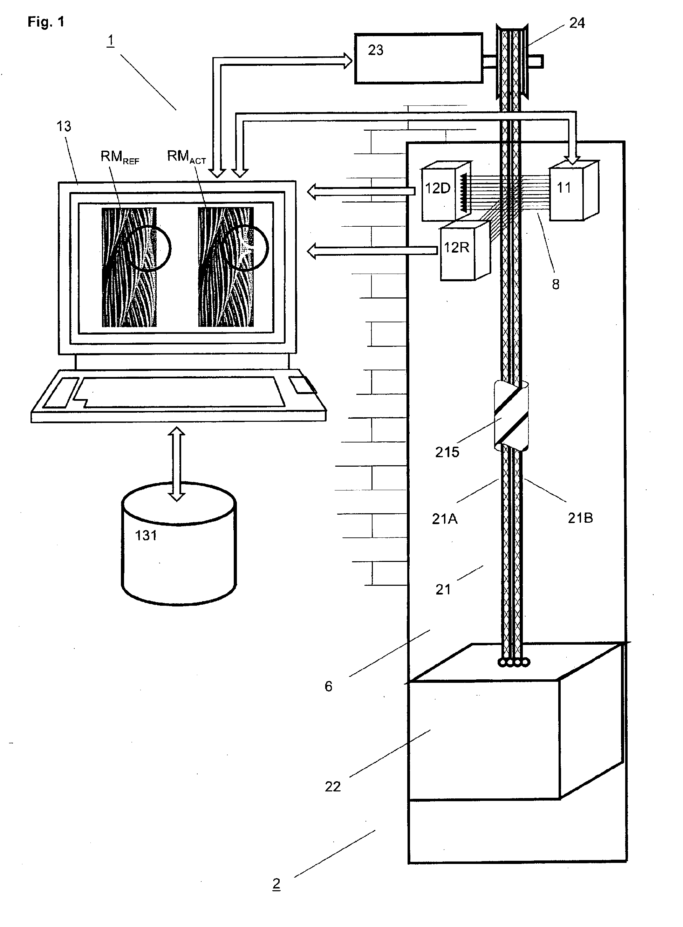

Fig. 1 zeigt eine schematische Darstellung eines Ausführungsbeispiels einer Aufzugsanlage 2, welche eine in einem Aufzugsschacht 6 vertikal verfahrbare Aufzugskabine 22 aufweist, die über Tragelemente 21 und eine Treibscheibe 24 mit einer Antriebseinheit 23 verbunden ist. Weitere Komponenten der Aufzugsanlage 2 (z.B. Gegengewicht und Sicherheitseinrichtungen) oder Details zur Aufhängung der Aufzugskabine 22 (z.B. 1:1, 2:1 etc. Aufhängung) sind aus Übersichtsgründen in Fig. 1 nicht gezeigt. Es versteht sich jedoch, dass die hier beschriebenen Ausführungsbeispiele unabhängig von diesen beispielhaft genannten Komponenten oder Details in der Aufzugsanlage 2 zur Anwendung kommen können.

Die Aufzugsanlage 2 ist ferner mit einer Prüfvorrichtung 1 versehen, mittels der ein Tragelenient 21 geprüft werden kann. Im dargestellten Ausführungsbeispiel umfasst das Tragelement 21 eine Ummantelung 215 aus Kunststoff, in der beispielsweise zwei Drahtseile 21A, 21B integriert sind. Es versteht sich jedoch, dass in einem anderen Ausführungsbeispiel mehr als zwei Drahtseile in der Ummantelung 215 eingebettet sein können. Der Kunststoff ist in diesem Ausführungsbeispiel für sichtbares Licht nicht transparent, so dass die Drahtseile 21A, 21B von aussen nicht sichtbar sind. Je nach Ausgestaltung des Tragelements 21 - Rundseil oder Flachseil/-riemen - hat die Ummantelung 215 eine gekrümmte Oberfläche, wie in Fig. 1 für ein Rundseil angedeutet, oder mindestens eine flache Oberfläche für ein Flachseil. Wie oben erwähnt, ist ein flaches Seil breiter als hoch/dick.

Es versteht sich, dass die Prüfvorrichtung 1 nicht auf das Prüfen von ummantelten Tragelementen 21 beschränkt ist. Die Prüfvorrichtung 1 ist prinzipiell auch zur Prüfung von Tragelementen 21 geeignet, welche keine, nur eine dünne oder eine transparente Ummantelung aufweisen. Es kann beispielsweise vorkommen, dass die Oberfläche eines Teils eines nicht ummantelten Tragelements 21 Ablagerungen, Abrieb oder Verschmutzungen aufweist, so dass die eigentliche Oberfläche des Tragelements 21 nicht sichtbar ist. Die Prüfvorrichtung 1 ermöglicht vorzugsweise das Prüfen auch eines solchen Oberflächenteils.

Die Prüfvorrichtung 1 weist in einem Ausführungsbeispiel eine Sendeeinheit 11 und zwei Empfangseinheiten 12D, 12R auf, die mit einer Rechnereinheit 13 verbunden sind. Die Rechnereinheit 13 dient zu einer Steuerung der Prüfvorrichtung 1 sowie einer Auswertung der von den Empfangseinheiten 12D, 12R empfangenen Daten. Ein Ergebnis oder ein Teil eines Ergebnisses der Auswertung kann im dargestellten Beispiel auf einem Monitor oder Bildschirm angezeigt werden, beispielsweise als Soll- und Istzustände. Die Rechnereinheit 13 kann eine mobile Einheit sein, die bei Bedarf beziehungsweise bei Wartungsarbeiten beispielsweise über eine Schnittstelleneinheit mit einer zentralen Aufzugssteuerung verbunden ist oder verbindbar ist. Alternativ dazu kann die Rechnereinheit 13 ein Teil der Aufzugsanlage 2 sein, der in der Aufzugsanlage 2 auf Dauer verbleibt. In einer Ausführungsvariante arbeitet die Rechnereinheit 13 mit der Aufzugssteuerung zusammen. So steuert beispielsweise die Aufzugssteuerung z.B. die Antriebseinheit 23 entsprechend dem Auswertefortschritt der Rechnereinheit 13 an, um die Tragelemente 21 an der Sendeeinheit 11 und den Empfangseinheiten 12D, 12R vorbeizubewegen. Die Rechnereinheit 13 aktiviert dementsprechend die Sendeeinheit 11 und die Empfangseinheiten 12D, 12R. Selbstverständlich sind auch bei einer derartigen Messfahrt alle Sicherheitsfunktionen der Aufzugssteuerung aktiviert, es wird dabei jedoch mit einer in der Regel reduzierten Fahrgeschwindigkeit verfahren.

In der Regel wird die Prüfvorrichtung lediglich temporär zum Zwecke der Prüfung der Tragelemente in der Aufzugsanlage eingesetzt Die Aufzugsanlage wird dazu für den Personenverkehr gesperrt und die Prüfvorrichtung wird zusammen mit den Auswerteeinheiten, vorzugsweise nahe des Aufzugsantriebs so befestigt, dass ein Tragelement geprüft werden kann. Anschliessend wird die Kabine über den gesamten Fahrbereich mit kleiner, gleichmässiger Geschwindigkeit von etwa 0.1 m/s verfahren. Die Prüfvorrichtung erfasst dabei Störungen im Tragelement und gibt die mittels Prüfprotokoll, Signalton oder mittels Bezeichnung, etc aus. Die Wartungsperson erfasst in dieser Art und weise alle in der Aufzugsanlage eingebauten Tragelemente. Zum Abschluss untersucht der Wartungsfachmann die als kritisch bezeichneten Stellen der Tragelemente und entscheidet über einen allfälligen Ersatz des Tragelements.

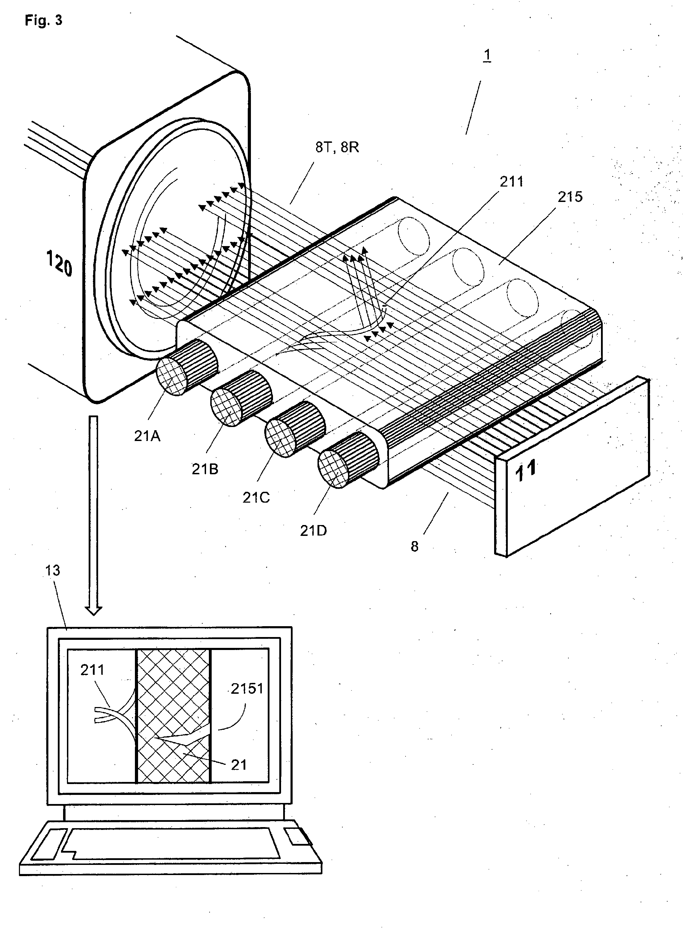

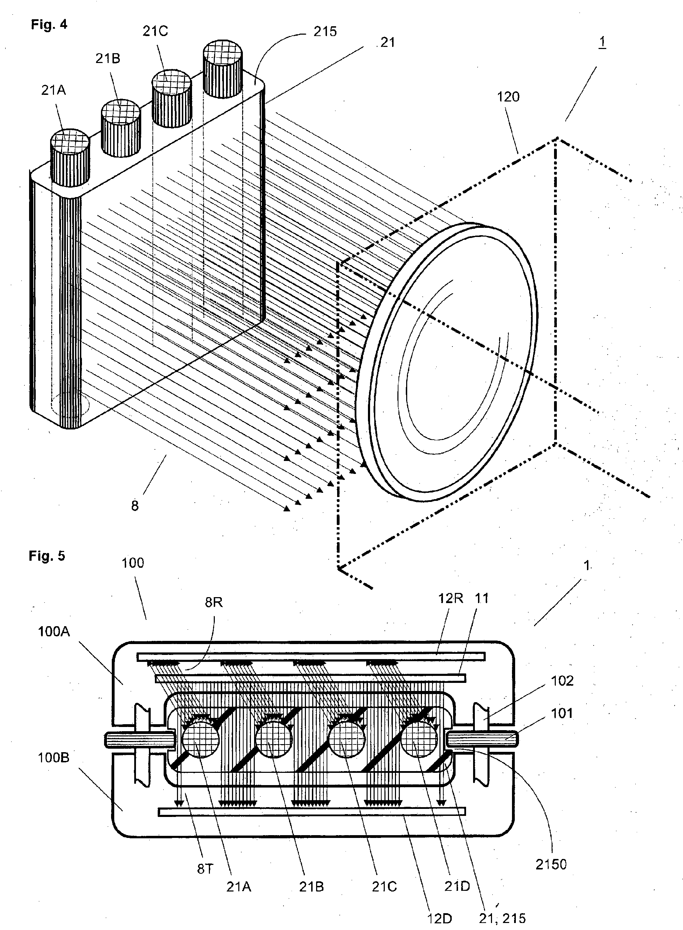

Abweichend von dem in Fig. 1 gezeigten Ausführungsbeispiel kann die Prüfvorrichtung 1 nur eine Empfangseinheit 12D, 12R aufweisen. Diese Empfangseinheit kann wie in Fig. 1 gezeigt im Schacht 6 angeordnet sein. Fig. 3 (siehe unten) illustriert eine beispielhafte Anordnung. Ist im Schacht 6 genügend Tageslicht oder eine andere Lichtquelle vorhanden, kann ebenfalls auf die Sendeeinheit 11 verzichtet werden. Eine beispielhafte Ausgestaltung dieser Anordnung ist in Fig. 4 (siehe unten) gezeigt.

Die Rechnereinheit 13 ist, wie dargestellt, mit einer Speichereinheit bzw. einer Datenbank 131 verbunden, in der Referenzdaten (Referenzmuster) abgelegt sind. In einem nicht dargestellten Ausführungsbeispiel ist die Datenbank 131 in der Rechnereinheit 13 vorhanden beziehungsweise in diese integriert. Die Referenzdaten beschreiben "ideale", d.h. unbeschädigte Tragelemente 21 in einem Sollzustand. Die Prüfvorrichtung 1 führt mit diesen Referenzdaten dann einen Soll-Ist Vergleich durch, wie unten genauer beschrieben ist, dessen Ergebnis die Rechnereinheit 13 bildlich darstellen kann.

Die Rechnereinheit 13 ist in einem Ausführungsbeispiel eine Computereinheit, in der unter anderem ein Prozessor und ein Auswerteprogramm installiert sind. Das Auswerteprogramm führt einen festgelegten Auswertealgorithmus aus, wie er beispielhaft im Folgenden beschrieben ist. Die Computereinheit kommuniziert mit der Sendeeinheit 11, den Empfangseinheiten 12D, 12R und dem Antrieb 23. Die Computereinheit verarbeitet empfangene Strahlung gemäß dem installierten Auswerteprogramm und gibt Verarbeitungsergebnisse oder Teile davon auf dem Monitor oder Bildschirm aus.

Die Prüfung der Tragelemente 21 kann während des Normalbetriebs der Aufzugsanlage 2 oder auch während eines Testbetriebs der Aufzugsanlage 2 durchgeführt werden. Bei Nichtgebrauch der Aufzugsanlage 2 durch den Anwender (zum Beispiel nachts oder am Wochenende) könnte diese beispielsweise selbsttätig in einen Testmodus wechseln, in dem eine Prüfung bestimmter Abschnitte der Tragelemente 21 durchgeführt wird. Von der Rechnereinheit 13 kann dabei in einem Ausführungsbeispiel registriert werden, welche Abschnitte bereits geprüft wurden.

Eine Empfangseinheit, wie sie in den hier beschriebenen Ausfuhrungsbeispielen eingesetzt wird, hat eine Sensoreinheit (z. B. eine Vielzahl von Sensoren (z.B. CCD Sensoren für den im Wesentlichen sichtbaren Strahlungsbereich und Mikrobolometer für den unsichtbaren Bereich), die in einem Sensorarray angeordnet sein können), die für den Wellenlängenbereich der verwendeten elektromagnetischen Strahlung empfindlich ist. Derartige Sensoren sind bekannt, zum Beispiel aus der Verwendung in einer Digitalkamera oder in thermischen Detektoren.

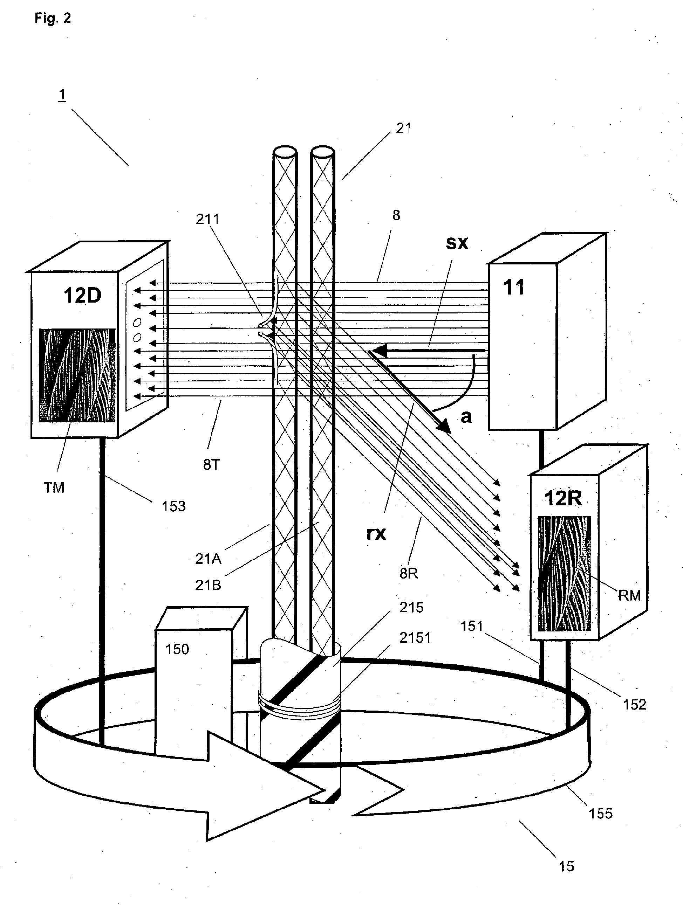

Fig. 2 zeigt schematisch ein Ausführungsbeispiel einer Prüfvorrichtung, in dem von der Sendeeinheit 11 abgegebene elektromagnetische Prüfstrahlung 8 der ersten Empfangseinheit 12D über die Transmissionsachse sx und der zweiten Empfangseinheit 12R über eine Reflektionsachse rx zugeführt werden, die ihren Ursprung am Tragelement 21 hat. Anhand von entlang der Transmissionsachse sx empfangenen Prüfstrahlung 8T (von der Sendeeinheit 11 aus betrachtet hinter dem Tragelement 21) werden in der Rechnereinheit 13 Transmissionsmuster TM gebildet, von denen eines in Fig. 2 symbolisch gezeigt ist. Anhand der entlang der Reflektionsachse rx empfangenen Prüfstrahlung 8R werden in der Rechnereinheit 13 Reflektionsmuster RM gebildet, von denen ebenfalls eines in Fig. 2 symbolisch gezeigt ist.

Das Transmissionsmuster TM zeigt die Silhouette oder den Schattenwurf des Tragelements 21. In Abhängigkeit der Wellenlänge der elektromagnetischen Prüfstrahlung wird die Silhouette der Ummantelung 215 (bei Wellenlängen im nm-Bereich) oder die Silhouette der metallenen Drahtseile 21A, 21 B (bei Wellenlängen im µm-Bereich) vermessen. Das Reflektionsmuster RM, das anhand reflektierter elektromagnetische Prüfstrahlung gebildet wird, zeigt die Struktur der Oberfläche der metallenen Drahtseile 21A, 21B in detaillierter Darstellung und weist typischerweise einen grösseren Informationsgehalt auf als das Transmissionsmuster TM.

In Fig. 2 ist gezeigt, dass ein peripher angeordneter Draht 211 eines der Drahtseile 21A aufgebrochen ist und dessen Drahtenden nach aussen ragen, bzw. ausgefranst sind. Durch diese Beschädigung werden sowohl das Transmissionsmuster TM als auch das Reflektionsmuster RM beeinflusst, wie dies in Fig. 2 angedeutet ist. Die seitlich abstehenden Drahtenden 211 unterbrechen an der betreffenden Stelle die Prüfstrahlung und reflektieren einen entsprechenden Strahlungsanteil über die Reflexionsachse rx zurück. Für die Bildung des Transmissionsmusters TM fehlen im entsprechenden Bereich daher Strahlungsanteile, während für die Bildung des Reflektionsmusters RM im entsprechenden Bereich zusätzliche Strahlungsanteile vorliegen. Anhand der simultanen Bildung und Überwachung des Transmissionsmusters TM und des Reflektionsmusters RM kann daher eine erhöhte Sicherheit erreicht werden. Dabei ist es sinnvoll, die Ergebnisse beider Prüfkanäle miteinander zu vergleichen. Dadurch können nicht nur die Messergebnisse präzisiert werden, sondern es wird gleichzeitig auch die korrekte Funktion beider Kanäle überprüft.

Durch einen Vergleich der mit den Empfangseinheiten 12D, 12R aufgenommenen Transmissionsmuster TM und Reflektionsmuster RM mit je einem Referenzmuster RM des Sollzustands können Veränderungen festgestellt werden. In Fig. 1 sind auf dem Bildschirm der Rechnereinheit 13 ein Referenzmuster RM_{REF} und ein aktuell aufgenommenes Reflektionsmuster RM_{ACT} gezeigt, die miteinander verglichen werden. Das Reflektionsmuster RM besteht aus einem Streifenmuster in zum Beispiel verschiedenen Graustufen und entspricht einem "Fingerprint" des Tragelements 21 und kann entsprechend verarbeitet werden, um relevante Unterschiede festzustellen. Ein Verfahren zum Vergleich von Fingerprints ist beispielsweise aus US7333641 bekannt. Dieses Verfahren dient der Analyse von gestreiften Bildmustern, wie sie auch bei der Aufnahme von Reflektionsmustern auftreten. Bei den erfindungsgemäss aufgenommenen Reflektionsmustern werden Streifen durch die einzelnen Litzen des Tragelements 21A bzw. 21B verursacht.

Auch Verfahren zur automatischen Gesichtserkennung basieren auf einem Vergleich zwischen einem gespeicherten Bild (Referenz-Gesicht) und einem aktuell aufgenommenen Bild (Ist-Bild). Die Veröffentlichung "Video-based framework for face recognition in video" von Dmitry O. Gorodnichy, Proceedings of Second Canadian Conference on Computer and Robot Vision, Seiten 330-338, British Columbia, Canada, May 9 - 11, 2005, beschreibt wie Gesichter aus einer Videosequenz erkannt werden können und nennt zahlreiche Referenzdokumente. Auch das Dokument "FRVT 2006 and ICE 2006 Large-Scale Results" von P. Jonathon Philips et al., 29. März 2007, fasst sich mit der Erkennung von Gesichtern aus digitalen Bildaufnahmen und den dort zur Anwendung kommenden Algorithmen. Dieses Dokument beschreibt und bewertet insbesondere die Erkennungsleistung der Algorithmen, die von verschiedenen Anbietern angeboten werden.

Das genannte Verfahren zur Analyse von Fingerabdrücken oder einer der Algorithmen, die der automatischen Erkennung von Gesichtern zu Grunde liegt, kann in der Rechnereinheit 13 als Bildverarbeitende Software implementiert werden. Damit können Unterschiede der bei den hier beschriebenen Technologien vorkommenden Reflektionsmuster präzise festgestellt werden und ausgewertet werden.

Die Bilddaten werden in einem Ausführungsbeispiel in einem Koordinatensystem dargestellt und ausgewertet. Dabei sind verschiedene Auswertungen der Bilddaten möglich. Beispielsweise werden die Konturverläufe der Litzen oder Drähte erfasst und analysiert. Die Drahtkonturen weisen typischerweise über längere Strecken einen gleichen Helligkeitsverlauf auf, der vermessen werden kann. Ferner verlaufen die Konturen typischerweise zumindest annähernd gerade und parallel. Intakte Konturen bewirken somit gerade und parallele Konturverläufe. Sofern nun festgestellt wird, dass innerhalb eines Konturverlaufs eine Anomalie, d.h. Unterbrechungen, Ausbuchtungen, etc. vorliegt, kann ein entsprechender Fehler erkannt werden. Wie bereits erwähnt, resultieren bei Vorliegen Störungen im und am Tragelement nur unscharfe Konturen mit reduziertem Bildkontrast.

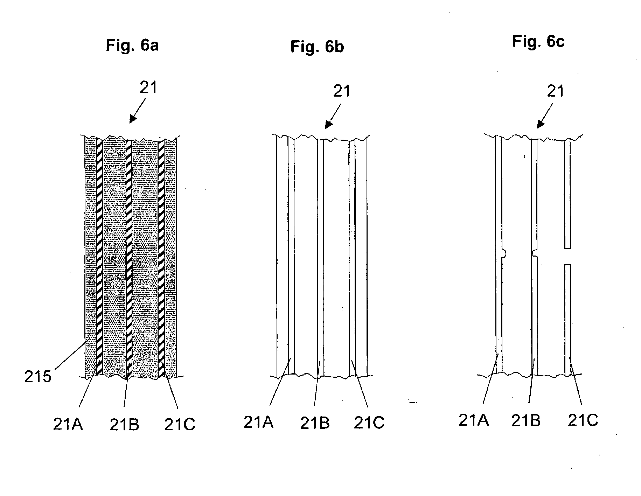

Eine Auswertung eines derartigen Konturverlaufes ist in den Fig. 6a bis 6c beispielhaft und schematisch dargestellt. Das von den Empfangseinheiten aufgenommene Transmissionsmuster und/oder Reflektionsmuster (Fig.6a) wird mittels Kantenextraktion aufgelöst. Bei einem intakten Tragelement (Fig. 6b) ergeben sich im Wesentlichen gerade Linien welche die peripheren Kanten der einzelnen Seile oder Litzen (21 A, 21 B, 21 C) beschreiben. Eine im Wesentlichen intakte, durchgehende Linie bedeutet, dass keine wesentliche Beschädigung des Kantenverlaufes und damit des Tragelements vorliegt. Zeigt der Kantenverlauf Ausbuchtungen (Fig. 6c, 21A), Einbuchtungen (Fig. 6c, 21B) oder Unterbrüche (Fig. 6c, 21C) deutet dies darauf hin, dass das betroffene Seil oder die Litze in diesem Bereich aufgestaucht, geknickt oder zerrissen wurde, oder dass ein Bündel von Einzelfasern des Seiles oder der Litze aus dem Seil- oder Litzenverbund austreten. Damit kann ganz besonders gut ein Zustand des Tragelements beurteilt werden, ohne dass ein Referenzbild konsultiert werden muss.

Vorzugsweise werden alle möglicherweise auftretende Mängel klassifiziert und mit zugehörigen Merkmalsdaten versehen, welche es erlauben, die Bilddaten gezielt nach Fehlern abzusuchen. Auf diese Weise gelingt es, die Bilddaten mit hoher Trefferwahrscheinlichkeit rasch zu analysieren.

Wie erwähnt können Unterbrüche, Ausbuchtungen oder Ausfransungen in Konturen eines Reflektionsmusters einer Störung eines Drahts 211 oder Litze zugeordnet werden. Flächige diffuse Abbildungen können typischerweise als Korrosions- oder Abriebbildung erkannt werden.

Besonders vorteilhaft ist der Vergleich der Transmissionsmuster und Reflektionsmuster mit einem Referenzmuster, welches für den betreffenden Typ von Tragelementen erstellt wurde. Weitere Verbesserungen können erzielt werden, indem nach der Installation eines Tragelements 21 Referenzmuster neu gebildet werden, indem das neu installierte Tragelement abgefahren und abgetastet wird. Das heisst, nach der Installation eines neuen Tragelements 21, wird dessen "Fingerabdruck" als Sollzustand aufgenommen und für zukünftige Vergleichsmessungen in die Speichereinheit 131 abgelegt.

Erfindungsgemässe Vergleichsmessungen können innerhalb kurzer Zeit mit hoher Präzision durchgeführt werden. Die Tragelemente 21 können daher permanent und mit minimalem Aufwand geprüft werden.

Dabei können verschiedene Konfigurationen von Sendeeinheiten 11 und Empfangseinheiten 12D, 12R vorgesehen werden. Insbesondere können eine Sendeeinheit 11 und eine Empfangseinheit 12D bzw. 12R in ein gemeinsames Modul integriert werden, welches beispielsweise mittels eines steuerbaren Arms in eine beliebige Position gefahren werden kann.

Fig. 2 zeigt eine mögliche Ausgestaltung der Prüfvorrichtung 1 mit nur einer Sendeeinheit 11 und zwei Empfangseinheiten 12D, 12R, die mittels Stützelementen 151, 152, 153 auf einem dreh- oder schwenkbaren Tragring 155 einer Montagevorrichtung 15 installiert sind. Der Tragring 155, der mittels einer Antriebseinheit 150 gehalten und angetrieben wird, ist dabei um das Tragelement 21 dreh- oder schwenkbar, so dass dieses von beliebigen Seiten abgetastet werden kann. Der schwenkbare Tragring hat den Vorteil, dass er das Tragelement 21 nicht vollumfänglich umschliessen muss. Dies ermöglicht eine einfache Montage des Tragringes, da er an beliebiger Stelle am Tragelement angeordnet werden kann.

Die Sendeeinheit 11 und die erste Empfangseinheit 12D sind entlang der Transmissionsachse sx, die durch das Tragelement 21 verläuft, gegeneinander ausgerichtet. Die entlang der Transmissionsachse sx ausgesendeten Prüfstrahlung werden an den Drahtseilen 21A, 21B reflektiert und in einem spitzen Winkel a mit einem hohen Strahlungsanteil innerhalb eines Raumwinkels zurückgeworfen, dessen Hauptachse die Reflexionsachse rx bildet. Der Winkel a, der typischerweise im Bereich von +/- 60° liegt, wird vorzugsweise anhand von Versuchen optimiert und kann je nach Konfiguration der Prüfvorrichtung und des Tragelements 21 ändern.

In Fig. 3 ist schematisch ein weiteres Ausführungsbeispiel einer Prüfvorrichtung 1 gezeigt, mittels der ein flaches Tragelement 21 geprüft wird, welches eine Ummantelung 215 aufweist, in der z.B. vier Drahtseile 21A, 21B, 21C, 21D integriert sind. Die Ummantelung 215, die einen rechteckförmige Querschnitt aufweist, schützt die integrierten Drahtseile 21 A, 21 B, 21C, 21 D vor Umgebungseinflüssen und verlängert somit deren Betriebszeit bis zur Ablegereife. Die Anzahl der integrierten Drahtseile wird dabei in Abhängigkeit der zu tragenden Last gewählt.

Das Tragelement 21 ist zwischen einer Empfangseinheit 120 und der Sendeeinheit 11 angeordnet. Das Tragelement 21 ist dabei so angeordnet, dass die elektromagnetische Prüfstrahlung aussendende Sendeeinheit 11 eine schmale Seite des Tragelements 21 bestrahlt beziehungsweise beleuchtet. Die Empfangseinheit 120 ist wie in den bisherigen Beispielen mit der Recheneinheit 13 verbunden. Bei der in Fig. 3 gezeigten Anordnung des Tragelements 21 sind vor allem Beschädigungen erkennbar, die auf einer der beiden breiten Seiten des Tragelements 21 auftreten.

Auch bei einem Tragelement 21 dieser Art können die beschriebenen Mängel auftreten, wie dies in Fig. 3 skizziert ist. Im integrierten Drahtseil 21 B ist ein Unterbruch einer Litze 211 aufgetreten, die in der Folge die Ummantelung 215 durchstossen hat und von aussen sichtbar ist. Gleichzeitig ist eine Beschädigung der Ummantelung 215 aufgetreten. Durch eine optische Prüfung des Tragelements 21 mittels der Empfangseinheit 120 gelingt es, diese Fehler zu erkennen. Die Empfangseinheit 120 ist in einer Ausführung eine Digitalkamera, die einzelne oder eine Folge von Digitalbildern mit einer festgelegten Auflösung speichert.

Die Empfangseinheit 120 erfasst somit elektromagnetische Strahlung im sichtbaren Wellenlängenbereich, die am Tragelement 21 reflektiert wird. Diese elektromagnetische Strahlung kann in einem Ausführungsbeispiel Tageslicht sein, wenn es ausreichend hell im Aufzugsschacht 6 ist. Wenn dies nicht der Fall ist, kann alle Sendeeinheit 11 eine beliebige Lichtquelle, beispielsweise eine im Aufzugsschacht 6 vorgesehene Beleuchtung, dienen. Vorzugsweise ist jedoch eine separate Lichtquelle 11 vorgesehen, welche den abgetasteten Teil des Tragelements 21 optimal beleuchtet. Von der Empfangseinheit 21 werden somit direkt eintreffende Transmissionsstrahlung 8T und an der Oberfläche des Tragelements 21 reflektierte Reflektionsstrahlung 8R erfasst und entsprechende Bilddaten an die Rechnereinheit 13 abgegeben. Durch die Auswertung der Bilddaten können visuell erkennbare Mängel, wie aufgebrochene nach aussen getretene Drähte 211 sowie Beschädigungen 2151 der Ummantelung 215 automatisch erkannt werden, wie dies auf dem Bildschirm der Rechnereinheit 13 dargestellt ist.

In Fig. 4 ist schematisch ein weiteres Ausführungsbeispiel einer Prüfvorrichtung 1 gezeigt, mittels der ein flaches Tragelement 21 geprüft wird. Das Tragelement 21 ist dabei vor einer Empfangseinheit 120 angeordnet und zwar so, dass eine breite Seite des Tragelements 21 der Empfangseinheit 120 gegenüber liegt. Die bisher gezeigte Verbindung zu der Recheneinheit 13 ist in Fig. 4 der Übersichtlichkeit halber nicht gezeigt.

Licht - Tageslicht oder künstliches Licht - wird an der Oberfläche der breiten Seite des Tragelements 21 reflektiert und trifft auf die Empfangseinheit 120. die Empfangseinheit 120, die wie beschrieben eine Digitalkamera sein kann, nimmt einzelne oder eine Folge von Digitalbildern auf und speichert diese ab.
Bei der in Fig. 4 gezeigten Anordnung des Tragelements 21 sind vor allem Beschädigungen erkennbar, die auf der der Empfangseinheit 120 zugewandten breiten Seite des Tragelements 21 auftreten.

Ist die wenigstens eine Empfangseinheit 12D, 12R, 120 in einer grösseren Distanz von Tragelement 21 angeordnet ist und dieses Bewegungen, z.B. Vibrationen unterworfen ist, so resultiert ein grösserer Aufwand für die Bilderfassung und Bildverarbeitung. In Fig. 5 ist eine mit dem Tragelement 21 koppelbare Prüfvorrichtung 1 gezeigt, mit der diese Nachteile vermieden werden können.

Das in Fig. 5 gezeigte Ausführungsbeispiel der Prüfvorrichtung 1 weist ein Gehäuse 100 mit zwei Gehäuseteilen 100A, 100B auf, die durch Halterungen 102 miteinander verbunden sind. Im ersten Gehäuseteil 100A sind die Sendeeinheit 11 und eine erste Empfangseinheit 12R angeordnet, die der Abbildung von Reflektionsmustern dient. Im zweiten Gehäuseteil 100B ist eine zweite Empfangseinheit 12D vorgesehen, welche der Abbildung von Transmissionsmustern dient. Die Halterungen 102 dienen im Beispiel gleichzeitig als Lagerwellen für optionale Laufräder 101, welche beidseits des Tragelements 21 an den schmalen Seitenflächen abrollen können. In einem Ausführungsbeispiel, die in Fig. 5 gezeigt ist, können die Laufräder 101 entlang am Tragelement 21 vorhandenen Gleitflächen 2150 abrollen.
Selbstverständlich kann das Gehäuse 100A, 100B auch derart ausgeführt sein, dass Laufräder oder Führungsflächen das Tragelements 21 an seinen Längsseiten führt. Speziell bei der Verwendung von gerillten Oberflächen des Tragelements, beispielsweise bei einem Keilrippenriemen, ist eine Führung mittels dieser gerillten Oberfläche sinnvoll.

In einem anderen Ausführungsbeispiel der Prüfvorrichtung 1 hat das Gehäuse 100 nur eine einzige Empfangseinheit. Die Empfangseinheit ist dabei so dimensioniert und angeordnet, dass sie ein Bild von der gesamten Breite des Tragelements 21 aufnehmen kann. Die Empfangseinheit kann deshalb ein einziges entsprechend bemessenes Sensorelement (Sensorarray) enthalten oder mehrere nebeneinander angeordnete einzelne Sensorelemente, die dann entsprechend verschaltet sind. Die Empfangseinheit ist auf der gleichen Seite angeordnet wie die Sendeeinheit 11, die die breite Seite des Tragelements 21 beleuchtet. Reflektiertes Licht wird dann analog zur Fig. 4 von der Empfangseinheit aufgezeichnet.

Die gezeigte Prüfvorrichtung 1 kann daher entlang dem Tragelement 21 verfahren oder stationär gehalten werden, während sich das Tragelement 21 bewegt. In jedem Fall werden die wenigstens eine Sendeeinheit 11 und die Empfangseinheiten 12D und 12R in konstantem Abstand vom Tragelement 21 gehalten. Auf diese Weise können qualitativ hochwertige Bildaufnahmen gemacht und mit minimalem Aufwand ausgewertet werden.

Erfindungsgemässe Prüfvorrichtungen 1 in den verschiedenen Ausgestaltungen werden vorzugsweise nahe der Treibscheibe 24 und somit in einem Bereich montiert, der von der Aufzugskabine 22 nicht durchfahren wird, und der zugleich eine Analyse von nahezu einer gesamten Länge des Tragelements ermöglicht.

## Patentansprüche

1. Verfahren zur Prüfung wenigstens eines Tragelements (21) einer Aufzugsanlage (1), in der das Tragelement (21) eine Kabine (22) trägt, wobei ein ummanteltes Tragelement (21) geprüft wird, mit folgenden Schritten:
Aktivieren einer Sendeeinheit (11) zur Abgabe von elektromagnetischer Strahlung; und
Aktivieren einer Empfangseinheit (12D, 12R, 120) für elektromagnetische Strahlung, die auf ein zu prüfendes Tragelement (21) ausgerichtet ist, um aus empfangener elektromagnetischer Strahlung das Tragelement (21) betreffende Prüfdaten (RM_{ACT}) zu erzeugen; und
Auswerten der Prüfdaten in einer Verarbeitungseinrichtung (13), um eine Abweichung der Prüfdaten (RM_{ACT}) von einem Sollzustand (RM_{REF}) des Tragelements (21) festzustellen;
wobei für eine Abtastung des Tragelements (21) von der Empfangseinheit (12D, 12R, 120) Strahlung, deren Wellenlänge im Bereich von 90 µm bis120 µm liegt, erfasst wird.

2. Verfahren nach Anspruch 1,
bei dem die Prüfdaten (RMACT) mindestens ein erstes digitales Bild darstellen, der Sollzustand (RMREF) des Tragelements (21) mittels mindestens einem gespeicherten zweiten digitalen Bild dargestellt ist, und das Auswerten der Prüfdaten einen Vergleich der ersten und zweiten digitalen Bilder umfasst.

3. Verfahren nach Anspruch 1 oder 2,
wobei von der Empfangseinheit (12D, 12R) Prüfstrahlung empfangen werden, die parallel zu einer Transmissionsachse (sx) verlaufen, welche das Tragelement (21) durchläuft, und/oder die ausgehend vom Tragelement (21) entlang wenigstens einer Reflektionsachse (rx) reflektiert werden, und
wobei die Prüfdaten Transmissionsmuster und/oder Reflektionsmuster sind, die ausgewertet werden, um Oberflächenveränderungen des Tragelements (21), bzw. von Bestandteilen des Tragelements (21) zu ermitteln.

4. Verfahren nach Anspruch 3,
wobei von der Sendeeinheit (11) Strahlung, deren Wellenlänge im Bereich von 90 µm bis 120 µm liegt, entlang der Transmissionsachse (sx) abgegeben werden.

5. Verfahren nach Anspruch 3 oder 4,
wobei ein Winkel (a), den die wenigstens eine Reflektionsachse (rx) und die Transmissionsachse (sx) einschliessen und ein Winkelbogen von der Sendeeinheit (11) zur Empfangseinheit (12R) verläuft, im Bereich von 0° bis 90° oder im Bereich von 0° bis -90°, vorzugsweise im Bereich von 0° bis 60° oder im Bereich von 0° bis -60° liegt.

6. Verfahren nach Anspruch 3 bis 5, ausserdem aufweisend;
Abbilden der Prüfdaten in zwei Dimensionen;
Ermitteln von Störungen für entlang der Transmissionsachse (sx) übertragene Strahlung, um Unterbrüche oder Ausbuchtungen von Drähten oder Fasern des Tragelements (21) zu ermitteln, und/oder
Ermitteln von Störungen für entlang der Reflektionsachse (rx) übertragene Strahlung, um Unterbrüche oder Ausbuchtungen Drähten oder Fasern des Tragelements (21) zu ermitteln.

7. Verfahren nach einem der Ansprüche 3 bis 6, ausserdem aufweisend:
Überwachen eines Durchmessers des Tragelements (21), um eine Reduktion oder Aufweitungen desselben und somit interne Fehler von Drähten, Litzen oder Fasern des Tragelements (21) zu ermitteln, und/oder
Erstellen von Reflektionsmustern des Tragelements (21) für entlang der Reflektionsachse (rx) übertragene Strahlung, um axiale Dehnungen des Reflektionsmusters und somit interne Fehler von Drähten, Litzen oder Fasern des Tragelements (21) zu ermitteln.

8. Verfahren nach einem der Ansprüche 1 bis 7, ausserdem aufweisend;
Vergleichen von neu gebildeten Transmissionsmustern und/oder Reflektionsmustem mit Referenzmustern, um Abweichungen vom Sollzustand des Tragelements (21) festzustellen.

9. Verfahren nach einem der Ansprüche 3 bis 8, ausserdem aufweisend:
Drehen oder Schwenken der Sendeeinheit (11) und/oder der wenigstens einen Empfangseinheit (12D, 12R) um das Tragelement (21) zwischen wenigstens zwei Positionen, um das Tragelement (21) von wenigstens zwei Seiten abzutasten, und/oder
Anordnen mehrerer Empfangseinheiten (12D, 12R) um das Tragelement (21) um das Tragelement (21) von mehreren Seiten abzutasten.

10. Vorrichtung (1) zur Prüfung wenigstens eines Tragelements (21) einer Aufzugsanlage, in der das Tragelement (21) eine Kabine (22) trägt, wobei das Tragelement (21) mit einer Ummantelung (215) versehen ist, aufweisend:
eine Sendeeinheit (11), welche der Abgabe von elektromagnetischer Prüfstrahlung dient; und
eine Empfangseinheit (12D, 12R, 120) für elektromagnetische Strahlung, die auf ein zu prüfendes Tragelement (21) ausgerichtet ist, wobei die Empfangseinheit (12D, 12R, 120) aus empfangener elektromagnetischer Prüfstrahlung mit einer Wellenlänge im Bereich von 90 µm bis 120 µm, das Tragelement (21) betreffende Prüfdaten (RMACT) erzeugt; und
eine Verarbeitungseinrichtung (13), die mit der Empfangseinheit (12D, 12R, 120) gekoppelt ist, um die Prüfdaten auszuwerten, um eine Abweichung der Prüfdaten (RMACT) von einem Sollzustand (RMREF) des Tragelements (21) festzustellen.

11. Vorrichtung (1) nach Anspruch 10,
bei der die Empfangseinheit (120) mindestens ein erstes digitales Bild erzeugt, und die Verarbeitungseinrichtung (13) das erste digital Bild mit mindestens einem gespeicherten zweiten digitalen Bild, das den Sollzustand (RMREF) des Tragelements (21) darstellt, vergleicht.

12. Vorrichtung (1) nach Anspruch 10 oder 11,
bei der die Empfangseinheit (12D, 12R) Prüfstrahlung empfängt, die parallel zu einer Transmissionsachse (sx) verlaufen, welche das Tragelement (21) durchläuft, und/oder die ausgehend vom Tragelement (21) entlang wenigstens einer Reflektionsachse (rx) reflektiert werden, wobei von der Empfangseinheit (12D, 12R) ermittelte Prufdaten in einer Auswerteeinheit (13) als Transmissionsmuster und/oder Reflektionsmuster abbildbar und auswertbar sind, um Oberflächenveränderungen des Tragelements (21), bzw. von Bestandteilen des Tragelements (21) zu ermitteln.

13. Vorrichtung (1) nach Anspruch 12,
bei der eine erste der Empfangseinheiten (12D) entlang der Transmissionsachse (sx) und eine zweite der Empfangseinheiten (12R) entlang der wenigstens einen Reflektionsachse (rx) ausgerichtet ist, wobei ein Winkel (a), den die wenigstens eine Reflektionsachse (rx) und die Transmissionsachse (sx) einschliessen und dessen Bogen von der Sendeeinheit (11) zur zweiten Empfangseinheit (12R) verläuft, im Bereich von 0° bis 90° oder im Bereich von 0° bis -90°, vorzugsweise im Bereich von 0° bis 60° oder im Bereich von 0° bis -60° liegt.

14. Vorrichtung (1) nach einem der Ansprüche 10 bis 13,
bei der die Verarbeitungseinrichtung (13) mit einer Datenbank (131) verbunden ist, in der Referenzmuster, vorzugsweise aktuelle und frühere Transmissionsmuster und Reflektionsmuster, gespeichert sind.

15. Vorrichtung (1) nach einem der Ansprüche 10 bis 14,
bei der die wenigstens eine Sendeeinheit (11) und die wenigstens eine Empfangseinheit (12R) in einem Modul integriert sind, welches mit den Tragelement (21) koppelbar ist.

## Claims

1. Method of testing at least one support element (21) of a lift installation (1), in which the support element (21) supports a cage (22), wherein an encased support element (21) is tested, comprising the following steps:
activating a transmitting unit (11) for output of electromagnetic radiation;
activating a receiving unit (12D, 12R, 120) for electromagnetic radiation, which is oriented towards a support element (21), which is to be tested, in order to produce test data (RM_{ACT}) relating to the support element (21) from received electromagnetic radiation; and
evaluating the test data in a processing device (13) so as to ascertain departure of the test data (RM_{ACT}) from a target state (RM_{REF}) of the support element (21);
wherein for scanning of the support element (21) radiation having a wavelength in the range of 90 µm to 120 µm is detected by the receiving unit (12D, 12R, 120).

2. Method according to claim 1, in which the test data (RM_{ACT}) represent at least one first digital image, the target state (RM_{REF}) of the support element (21) is represented by means of at least one stored second digital image and the evaluation of the test data comprises a comparison of the first and second digital images.

3. Method according to claim 1 or 2, wherein test radiation, which runs parallel to a transmission axis (sx) - which runs through the support element (21) - and/or which starting from the support element (21) is reflected along at least one reflection axis (rx), is received by the receiving unit (12D, 12R) and wherein the test data are transmission patterns and/or reflection patterns which are evaluated in order to determine changes in the surface of the support element (21) or components of the support element (21).

4. Method according to claim 3, wherein radiation having a wavelength in the range of 90 µm to 120 µm is output by the transmitting unit (11) along the transmission axis (sx).

5. Method according to claim 3 or 4, wherein an angle (a), which includes the at least one reflection axis (rx) and the transmission axis (sx) and which occupies an arc of an angle from the transmitting unit (11) to the receiving unit (12R), lies in the range of 0° to 90° or in the range of 0°to -90°, preferably in the range of 0° to 60° or in the range of 0° to -60°.

6. Method according to claim 3 to 5, additionally comprising:
imaging the test date in two dimensions;
determining disturbances for radiation transmitted along the transmission axis (sx) so as to ascertain interruptions or bulgings of wires or fibres of the support element (21) and/or
determining disturbances for radiation transmitted along the reflection axis (rx) so as to ascertain interruptions or bulgings of wires or fibres of the support element (21).

7. Method according to any one of claims 3 to 6, additionally comprising:
monitoring a diameter of the support element (21), so as to determine a reduction in or enlargements of the same and thus internal faults of wires, strands or fibres of the support element (21) and/or
establishing reflection patterns of the support element (21) for radiation transmitted along the reflection axis (rx) so as to determine axial stretching of the reflection pattern and thus internal faults of wires, strands or fibres of the support element (21).

8. Method according to any one of claims 1 to 7, additionally comprising:
comparing newly formed transmission patterns and/or reflection patterns with reference patterns so as to ascertain departures from the target state of the support element (21).

9. Method according to any one of claims 3 to 8, additionally comprising:
rotating or pivoting the transmitting unit (11) and/or the at least one receiving unit (12D, 12R) about the support element (21) between at least two positions so as to scan the support element (21) from at least two sides and/or
arranging a plurality of receiving units (12D, 12R) about the support element (21) in order to scan the support element (21) from a plurality of sides.

10. Device (1) for testing at least one support element (21) of a lift installation, in which the support element (21) supports a cage (22), wherein the support element (21) is provided with a casing (215), comprising:
a transmitting unit (11) serving for the output of electromagnetic test radiation;
a receiving unit (12D, 12R, 120) for electromagnetic radiation, which is oriented towards a support element (21) to be tested, wherein the receiving unit (12D, 12R, 120) produces test data (RM_{ACT}), which relate to the support element (21), from received electromagnetic test radiation at a wavelength in the range of 90 µm to 120 µm; and
a processing device (13) which is coupled with the receiving unit (12D, 12R, 120) so as to evaluate the test data in order to ascertain departure of the test data (RM_{ACT}) from a target state (RM_{REF}) of the support element (21).

11. Device (1) according to claim 10, in which the receiving unit (120) produces at least one first digital image and the processing unit (13) compares the first digital image with at least one stored second digital image, which represents the target state (RM_{REF}) of the support element (21).

12. Device (1) according to claim 10 or 11, in which the receiving unit (12D, 12R) receives test radiation, which runs parallel to a transmission axis (sx) - which runs through the support element (21) - and/or which starting from the support element (21) is reflected along at least one reflection axis (rx), wherein test data determined by the receiving unit (12D, 12R) can be imaged in an evaluating unit (13) as transmission patterns and/or reflection patterns and evaluated in order to determine changes in the surface of the support element (21) or of components of the support element (21).

13. Device (1) according to claim 12, in which a first one of the receiving units (12D) is oriented along the transmission axis (sx) and a second one of the receiving units (12R) is oriented along the at least one reflection axis (rx), wherein an angle (a), which includes the at least one reflection axis (rx) and the transmission axis (sx) and the arc of which extends from the transmitting unit (11) to the second receiving unit (12R), lies in a range 0° to 90° or in the range of 0° to -90°, preferably in the range of 0° to 60° or in the range of 0° to -60°.

14. Device (1) according to any one of claims 10 to 13, in which the processing device (13) is connected with a databank (131) in which reference patterns, preferably current and earlier transmission patterns and reflection patterns, are stored.

15. Device (1) according to any one of claims 10 to 14, in which the at least one transmitting unit (11) and the at least one receiving unit (12R) are integrated in a module which can be coupled to the support element (21).

## Revendications

1. Procédé pour contrôler au moins un élément porteur (21) d'une installation d'ascenseur (1) dans laquelle ledit élément porteur (21) porte une cabine (22), étant précisé qu'un élément porteur enrobé (21) est contrôlé, avec les étapes suivantes :
activation d'une unité d'émission (11) pour émettre un rayonnement électromagnétique ; et
activation d'une unité de réception (12D, 12R, 120) pour un rayonnement électromagnétique qui est dirigé vers un élément porteur à contrôler (21), afin de générer à partir du rayonnement électromagnétique reçu des données de contrôle (RM_{ACT}) concernant l'élément porteur (21) ; et
analyse des données de contrôle dans un dispositif de traitement (13), afin de constater un écart entre les données de contrôle (RM_{ACT}) et un état de consigne (RM_{REF}) de l'élément porteur (21) ;
étant précisé que pour une exploration de l'élément porteur (21), le rayonnement dont la longueur d'onde est située dans la plage de 90 µm à 120 µm est détecté par l'unité de réception (12D, 12R, 120).

2. Procédé selon la revendication 1, selon lequel les données de contrôle (RMACT) représentent au moins une première image numérique, l'état de consigne (RMREF) de l'élément porteur (21) est représenté à l'aide d'au moins une seconde image numérique mise en mémoire, et l'analyse des données de contrôle comprend une comparaison des première et seconde images numériques.

3. Procédé selon la revendication 1 ou 2,
selon lequel l'unité de réception (12D, 12R) reçoit un rayonnement de contrôle qui s'étend parallèlement à un axe de transmission (sx) traversant l'élément porteur (21), et/ou qui est réfléchi à partir de l'élément porteur (21) le long d'au moins un axe de réflexion (rx), et
les données de contrôle sont des modèles de transmission et/ou des modèles de réflexion qui sont analysés pour déterminer des modifications de surface de l'élément porteur (21) ou de composants de l'élément porteur (21).

4. Procédé selon la revendication 3, selon lequel un rayonnement dont la longueur d'onde est située dans la plage de 90 µm à 120 µm est émis par l'unité d'émission (11) le long de l'axe de transmission (sx).

5. Procédé selon la revendication 3 ou 4, selon lequel un angle (a) qui est défini par l'axe ou les axes de réflexion (rx) et l'axe de transmission (sx) et que décrit un arc d'angle de l'unité d'émission (11) jusqu'à l'unité de réception (12R) est situé dans la plage de 0° à 90° ou dans la plage de 0° à -90°, de préférence dans la plage de 0° à 60° ou dans la plage de 0° à -60°.

6. Procédé selon l'une des revendications 3 à 5, comportant en outre :
la représentation des données de contrôle en deux dimensions ;
la recherche de perturbations pour le rayonnement transmis le long de l'axe de transmission (sx), afin de déterminer des discontinuités ou des bombements de fils ou de fibres de l'élément porteur (21), et/ou
la recherche de perturbations pour le rayonnement transmis le long de l'axe de réflexion (rx), afin de déterminer des discontinuités ou des bombements de fils ou de fibres de l'élément porteur (21).

7. Procédé selon l'une des revendications 3 à 6, comportant par ailleurs :
la surveillance d'un diamètre de l'élément porteur (21) afin de déterminer une réduction ou des élargissements de celui-ci et, ainsi, des défauts intérieurs de fils, de torons ou de fibres de l'élément porteur (21), et/ou
l'établissement de modèles de réflexion de l'élément porteur (21) pour un rayonnement transmis le long de l'axe de réflexion (rx), afin de déterminer des allongements axiaux du modèle de réflexion et, ainsi, des défauts intérieurs de fils, de torons ou de fibres de l'élément porteur (21).

8. Procédé selon l'une des revendications 1 à 7, comportant par ailleurs :
la comparaison de modèles de transmission et/ou modèles de réflexion nouvellement formés, à des modèles de référence afin de constater des écarts par rapport à l'état de consigne de l'élément porteur (21).

9. Procédé selon l'une des revendications 3 à 8, comportant par ailleurs :
la rotation ou le pivotement de l'unité d'émission (11) et/ou de la ou des unités de réception (12D, 12R) autour de l'élément porteur (21) entre au moins deux positions, afin d'explorer l'élément porteur (21) à partir d'au moins deux côtés, et/ou
la disposition de plusieurs unités de réception (12D, 12R) autour de l'élément porteur (21) afin d'explorer l'élément porteur (21) à partir de plusieurs côtés.

10. Dispositif (1) pour contrôler au moins un élément porteur (21) d'une installation d'ascenseur dans laquelle ledit élément porteur (21) porte une cabine (22), étant précisé que l'élément porteur (21) est pourvu d'une gaine (215), comportant :
une unité d'émission (11) qui sert à émettre un rayonnement électromagnétique de contrôle ; et
une unité de réception (12D, 12R, 120) pour un rayonnement électromagnétique qui est dirigé vers un élément porteur à contrôler (21), étant précisé que l'unité de réception (12D, 12R, 120), à partir du rayonnement électromagnétique de contrôle reçu présentant une longueur d'onde située dans la plage de 90 µm à 120 µm, génère des données de contrôle (RMACT) concernant l'élément porteur (21) ; et
un dispositif de traitement (13) qui est couplé à l'unité de réception (12D, 12R, 120) pour analyser les données de contrôle, afin de constater un écart entre les données de contrôle (RMACT) et un état de consigne (RMREF) de l'élément porteur (21).

11. Dispositif (1) selon la revendication 10, avec lequel l'unité de réception (120) génère au moins une première image numérique, et le dispositif de traitement (13) compare la première image numérique à au moins une seconde image numérique mise en mémoire qui représente l'état de consigne (RMREF) de l'élément porteur (21).

12. Dispositif (1) selon la revendication 10 ou 11, avec lequel l'unité de réception (12D, 12R) reçoit un rayonnement de contrôle qui s'étend parallèlement à un axe de transmission (sx) traversant l'élément porteur (21), et/ou qui est réfléchi à partir de l'élément porteur (21) le long d'au moins un axe de réflexion (rx), étant précisé que les données de contrôle déterminées par l'unité de réception (12D, 12R) sont aptes à être représentées et analysées dans une unité d'analyse (13) sous la forme d'un modèle de transmission et/ou d'un modèle de réflexion, pour déterminer des modifications de surface de l'élément porteur (21) ou de composants de l'élément porteur (21).

13. Dispositif (1) selon la revendication 12, avec lequel une première unité de réception (12D) est orientée le long de l'axe de transmission (sx), et une seconde unité de réception (12R) le long de l'axe ou des axes de réflexion (rx), étant précisé qu'un angle (a) qui est défini par l'axe ou les axes de réflexion (rx) et l'axe de transmission (sx) et que décrit son arc de l'unité d'émission (11) jusqu'à la seconde unité de réception (12R) est situé dans la plage de 0° à 90° ou dans la plage de 0° à -90°, de préférence dans la plage de 0° à 60° ou dans la plage de 0° à -60°.

14. Dispositif (1) selon l'une des revendications 10 à 13, avec lequel le dispositif de traitement (13) est relié à une banque de données (131) dans laquelle sont mis en mémoire des modèles de référence, de préférence des modules de transmission et des modèles de réflexion actuels et passés.

15. Dispositif (1) selon l'une des revendications 10 à 14, avec lequel l'unité ou les unités d'émission (11) et l'unité ou les unités de réception (12R) sont intégrées dans un module qui est apte à être couplé à l'élément porteur (21).
